# EUROPEAN PATENT SPECIFICATION

(11) **EP 4 419 824 B1**
(45) Date of publication and mention of the grant of the patent: **10.12.2025**
(21) Application number: 22801231.6
(22) Date of filing: 21.10.2022
(51) Int. Cl.: G01M 13/005, F16L 25/03, G01N 27/04

(54) **SYSTEM AND METHOD FOR MONITORING AN INSULATING JOINT**
SYSTEM UND VERFAHREN ZUR ÜBERWACHUNG EINER ISOLIERENDEN VERBINDUNG
SYSTÈME ET MÉTHODE DE SURVEILLANCE D'UN JOINT ISOLANT

(30) Priority: 22.10.2021 IT 202100027227
(43) Date of publication of application: 28.08.2024
(73) Proprietor: Alfa Engineering Societa' Cooperativa, 41122 Modena (IT)
(72) Inventor: RUPPI, Cataldo, CENTO (FE) 44042 (IT); VERGAZZOLI, Gianluca, BOLOGNA (BO) 40138 (IT); CATTALINI, Marco, PADOVA (PD) 35135 (IT)
(74) Representative: Puggioli, Tommaso
(86) International application number: PCT/IB2022/060132
(87) International publication number: WO 2023/067565

(56) References cited:
- CN-U- 211 263 679
- JP-U- S59 195 540
- US-A- 2 759 175
- US-A1- 2019 258 278
- US-A1- 2020 018 662

## Description

### Technical field

This invention relates to a system and a method for monitoring an insulating joint in a pipeline.

In general, the insulating joints are apparatuses used in oil pipelines, gas pipelines or in systems for transporting gas or liquid, such as, for example, water, to interrupt the electrical continuity of the transport line.

### Background art

The reference insulating joints comprise two metal cylindrical sections coupled to each other and separated by a section made of material non-conductive to electricity, which provides an electrical insulation condition between the two ends. These joints are also known as "monolithic joints".

It is essential that all the parts of the insulating joint are mechanically integral with each other and are able to withstand corrosive phenomena, pressure and temperature variations, which are normally established by the pipeline designer in order to guarantee the safety of the pipeline over time.

A deterioration of the insulation, due to a reduction in the insulation resistance of the insulation, could lead, for example, to corrosive phenomena which would deteriorate the mechanical characteristics of the insulating joint, until also causing the failure with consequent problems in terms of safety both of the pipeline and of the operators.

In order to overcome these problems, the insulation resistance of the joint must be measured at regular intervals in such a way as to intervene on the joint and replace it if it does not comply with the values indicated by the manufacturer.

In particular, it is necessary to check the integrity of the insulating joint which must be able to avoid the spread of induced currents which may damage the joint.

Usually, the joint has electrical sockets which allow technicians, during maintenance, to check the sealing status of the joint by measuring the electrical resistance.

In order to monitor the conditions of the joint, it is necessary to physically reach it and carry out the necessary measurements to test the seal/electrical insulation.

Disadvantageously, the joints, being used, for example, in water pipelines or gas pipelines may be located in remote environments, which are particularly hostile and complex to reach.

The monitoring operations are therefore difficult and there may be delays in operations for replacing the joint in case of need.

The need is felt of simplifying the operations for monitoring the insulating joint in order to be able to intervene promptly.

A system for monitoring an insulating joint is known from CN211263679U.

### Aim of the invention

The aim of this invention is to satisfy at least the above-mentioned need by providing a system and a method for monitoring an insulating joint in a pipeline which allows the conditions of the joint to be controlled, simplifying the monitoring operations for the technicians.

At least said aim is achieved by the invention as characterised in the independent claims.

The dependent claims correspond to possible different embodiments of the invention.

According to independent claim 1, the invention relates to a system for monitoring an insulating joint in a pipeline.

The monitoring system comprises an insulating joint schematically comprising a first tubular element, a second tubular element and a first insulating ring positioned between the first and the second element.

The insulating ring is made of a material non-conductive to electricity which guarantees the electrical insulation between the two elements of the joint.

The insulating joint comprises at least a first electrical socket welded to the first tubular element and a second electrical socket welded to the second tubular element.

The monitoring system comprises a first monitoring device connected to the insulating joint.

The first monitoring device comprises at least a first connector connected to the first electrical socket and a second connector connected to the second electrical socket.

The first monitoring device is configured to measure an electrical resistance value between the first and second sockets using the first and the second connectors.

The electrical resistance is a physical quantity which indicates the tendency of a body to oppose the passage of an electric current, when subjected to an electrical voltage.

According to an example, the first device measures the value of electrical resistance at regular time intervals.

According to an example, the first device measures the value of continuous electrical resistance.

The electrical resistance indicates the insulation resistance of the joint.

The first monitoring device is configured to generate and send an output signal as a function of the value of the electrical resistance measured.

The system comprises a data receiving and processing unit configured to receive the output signal of the monitoring device.

For example, the data receiving and processing unit is an electronic processor or a mobile device, such as, for example, a smartphone or a tablet.

According to an aspect, the monitoring device comprises a multimeter or an ohmmeter (configured to measure the electrical resistance value).

According to an aspect, the monitoring device comprises a microprocessor configured to control the ohmmeter so that it performs a resistance measurement and receives the measured electrical resistance value.

According to an aspect, the monitoring device comprises a transmission module, for example GSM, in communication with the microprocessor, by which the device sends/transmits the output signal to the data receiving and processing unit.

Advantageously, the monitoring system makes it possible to automate the periodic measurement of the electrical resistance by monitoring the electrical insulation of the joint remotely.

Advantageously, the monitoring system makes it possible to remotely control the electrical insulation status of the joint by measuring the electrical resistance remotely.

Advantageously, the monitoring system makes it possible to assess the conditions of the joint without the technicians physically going the spot in which the joint is located, thereby simplifying and speeding up the monitoring operations.

Advantageously, by monitoring the electrical resistance it is possible to guarantee the safety of the pipeline in which the joint is used; in effect, by controlling the electrical resistance, the corrosive phenomena which could deteriorate the mechanical characteristics of the joint are, for example, monitored.

According to an aspect, the monitoring device comprises a satellite receiver configured to send a position signal of the insulating joint.

According to an example, the satellite receiver is a GPS receiver.

According to an aspect, the output signal of the first monitoring device is a function of the position signal and of the measured electrical resistance value.

Advantageously, the satellite receiver makes it possible to promptly identify the exact position of the insulating joint and intervene in the case of a malfunction.

The receiver is, for example, in communication with the microprocessor which, through the GSM module, transmits the position signal to the data receiving and processing unit.

According to an aspect, the first tubular element comprises a first portion and a first extension of the first portion.

According to an aspect, the first extension is welded to the first portion by means of a first welding.

According to an aspect, the second tubular element comprises a second portion and a second extension of the second portion.

According to an aspect, the second extension is welded to the second portion by means of a second welding.

According to an example, the first portion and the second portion are forged.

According to an example, the first and second extensions are standard pipes which are available on the market whose thickness and diameter depends on the design specifications.

According to an aspect, the first socket is welded to the first extension. According to an aspect, the second socket is welded to the second extension.

The welds guarantee electrical continuity in the various parts that make up the joint.

The first insulating ring is located between the first portion and the second portion.

The insulating joint comprises a closing body welded to the first portion of the first tubular element by means of a third weld.

The closing body is configured for coupling the first and the second tubular elements.

The closing body is therefore in electrical continuity with the first tubular element.

The closing body is, for example, a ring nut.

By means of a press, the two tubular elements are compressed against each other and held in position by the closing body; during the pressing step the closing body is welded to the first tubular element.

The closing body at least partly covers the first tubular element, the first insulating ring and the second tubular element.

Preferably, the closing body at least partly covers the first portion, the first insulating ring and the second portion.

According to an aspect, the insulating joint comprises elastomers interposed between the first tubular element and the insulating ring and elastomers between the second tubular element and the insulating ring.

Advantageously, the elastomers guarantee the hydraulic and pneumatic seal of the joint.

The elastomers activate when the closing body is pressed against the first tubular element.

According to a aspect, the insulating joint comprises an insulating material positioned between the closing body and the second tubular element.

Preferably, the insulating material is in the form of a second insulating ring positioned between the closing body and the second tubular element.

According to a preferred example, the second ring is formed by a plurality of lengths of an insulating material arranged in a loop and spaced from each other.

Reference is hereinafter made to the making of the second insulating ring using pieces without limiting the scope of the invention.

According to an example, the insulating ring and the plurality of pieces of insulating material are made of *Nema G11.*

According to an aspect, the insulating joint comprises a first layer of resin positioned between the closing body and the second tubular element; the first layer of resin is in contact with the first ring and the pieces of insulating material.

According to an aspect, the insulating joint comprises a second layer of resin positioned between the closing body and the second tubular element.

In particular, the second layer of resin is positioned on the side opposite the first layer of resin with respect to the pieces of insulating material.

The first and second layers of resin are injected downstream of the welding of the closing element to the tubular element.

The pieces of insulating material are looped and spaced sufficiently to allow the passage of the injected resin.

The resin layers are, for example, epoxy resin layers.

Advantageously, the layers of resin and the insulating rings guarantee the electrical insulation between the first tubular element and the second tubular element and between the second tubular element and the closing body (welded and in electrical continuity with the first tubular element).

In other words, the first ring, the pieces of insulating material and the layers of resin determine the electrical insulation between the second tubular element and the first tubular element welded to the closing element.

According to an aspect, the first tubular element, the second tubular element and the closing body are made of a conductive material, preferably steel.

According to an aspect, the insulating joint comprises a third electrical socket welded to the second tubular element and a fourth electrical socket welded to the closing body.

According to an aspect, the monitoring system comprises an overvoltage discharge device.

According to an aspect, the overvoltage discharge device is connected to the third and fourth electrical sockets.

Advantageously, the overvoltage discharge device makes it possible to protect the joint, entering into operation if there are strong voltage discharges, for example caused by lightning.

The overvoltage discharge device is, for example, a spark gap.

According to independent claim 7, the invention relates to a method for monitoring an insulating joint.

For example, the electrical resistance value is measured by means of the first device, thanks to an ohmmeter or a multimeter, configured to generate and send the signal as a function of the measured value.

According to an aspect, the method comprises a step of associating to the signal an identification code of the insulating joint.

Advantageously, associating the identification code of the joint with the first signal makes it possible to quickly identify the insulation joint monitored.

According to an aspect, the method comprises a step of sending a position signal of the insulating joint.

Advantageously, sending a position signal of the insulating joint makes it possible to quickly locate the monitored insulating joint.

According to an aspect, the method comprises a step of establishing a threshold value for the electrical resistance value between the first and the second tubular elements of the joint.

The threshold value means an electrical resistance limit value, established, for example, by the owner/designer of the pipeline, below which, for example, the safety of the joint is considered compromised or it is necessary to control the joint.

The threshold value may depend, among other things, on the type of coating of the pipe or pipeline in which the joint is inserted, the size of the pipe and the resistivity of the ground in which the joint is positioned.

According to an aspect, the threshold value may be defined on the basis of an electrical resistance value measured between the upstream and downstream of the joint.

Preferably, the step of establishing a threshold value for the electrical resistance value between the first and the second tubular element of the joint comprises a step of measuring a resistance value between the upstream and downstream of the joint installed in the pipeline.

According to an aspect, the step of establishing a threshold value for the electrical resistance value between the first and the second tubular elements of the joint comprises a step of processing the threshold value as a function of the measured resistance value.

Advantageously, measuring a resistance value between the upstream and downstream of the joint makes it possible to define a customised threshold value for the specific joint in the context in which it is installed.

According to an example, the step of measuring a resistance value between the upstream and downstream of the joint comprises a step of positioning a first and a second measuring plate in the ground close to the joint and measuring the resistance between them.

The threshold value can be established by simulating an installation of the insulating joint in the ground along a pipeline by placing the joint in an electrolyte and immersing the plates in the electrolyte.

Advantageously, the first and second plates allow a base resistance to be measured as a function of which the threshold value is fixed.

According to an aspect, the method comprises a step of generating and sending a first alarm signal as a function of the first signal and the threshold value.

Advantageously, by monitoring the joint periodically it is possible to check if the threshold value is reached, determined by a deterioration of the insulating ring, and consequently generate and send an alarm signal, promptly intervening on the joint.

### Brief description of the drawings

The main features of the invention are more apparent from the detailed description which follows, with reference to the accompanying drawings which illustrate a preferred embodiment of the invention purely by way of non-limiting example, and in which:
- Figure 1 illustrates a schematic side view, partly in blocks, of a pipeline comprising a monitoring system according to the invention;

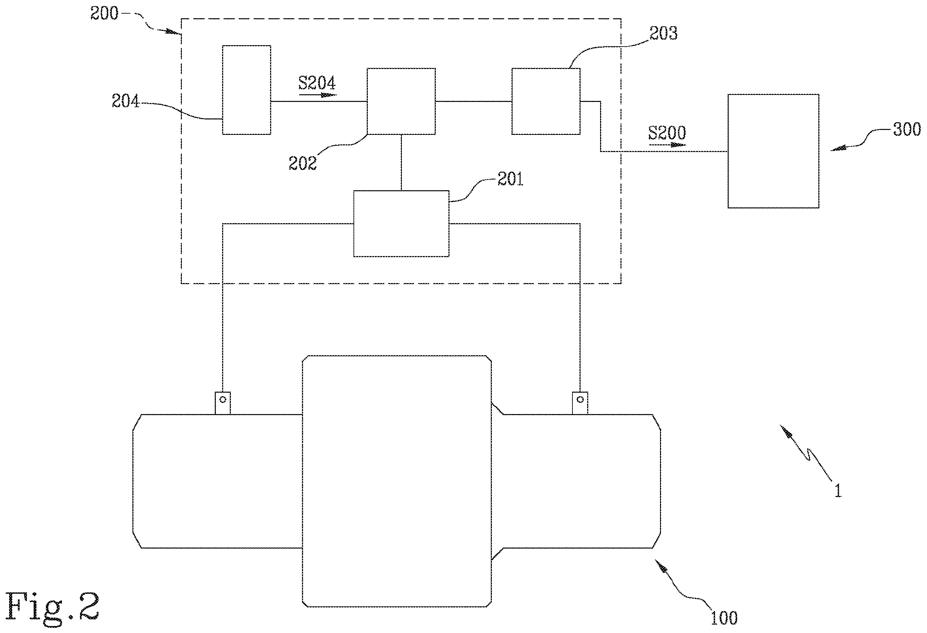

- Figure 2 illustrates a schematic view of a monitoring system, according to the invention.

### Detailed description of preferred embodiments of the invention

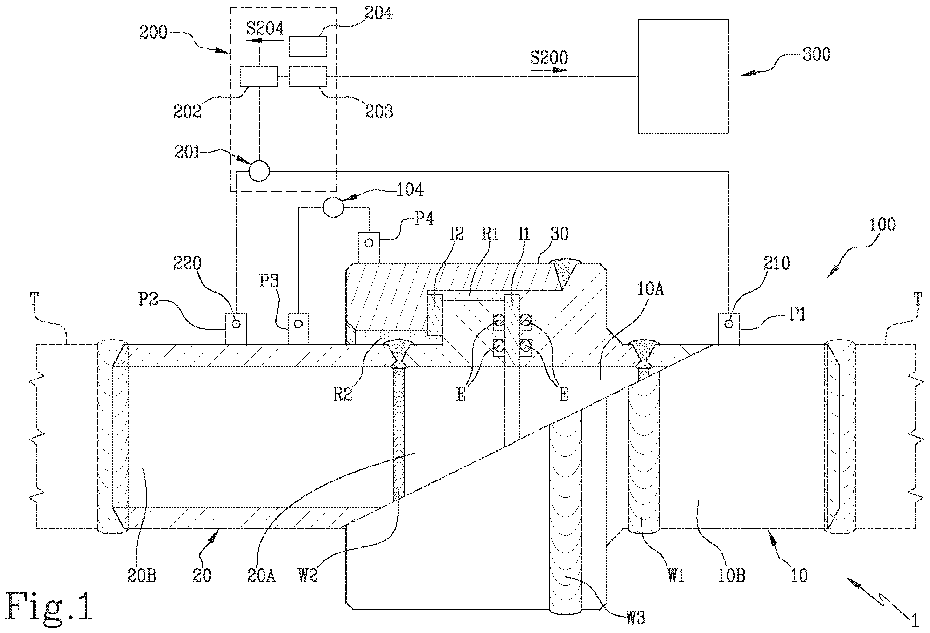

With reference to the accompanying drawings and in particular with reference to Figure 1, the numeral 1 denotes a system for monitoring an insulating joint in a pipeline T.

The system 1 schematically comprises an insulating joint 100, a monitoring device 200 connected to the joint 100 and a data receiving and processing unit 300 in communication with the device 200.

The joint 100 comprises a tubular element 10 and a tubular element 20.

The joint 100 comprises an insulating ring I1 positioned between the element 10 and the element 20.

According to an embodiment, the joint 100 comprises a plurality of elastomers E positioned on opposite sides of the ring 11.

According to an embodiment, two elastomers are positioned between the tubular element 10 and the ring 11.

According to an embodiment, two elastomers are positioned between the tubular element and the ring 11.

Advantageously, the elastomers E guarantee the hydraulic seal of the joint.

According to a preferred embodiment, the tubular element 10 comprises a portion 10A and an extension 10B welded to the portion 10A by means of a weld W1.

According to a preferred embodiment, the tubular element 20 comprises a portion 20A and an extension 20B welded to the portion 20A by a weld W2.

The joint 100 comprises an electrical socket P1 welded to the element 10 and an electrical socket P2 welded to the element 20.

According to an embodiment, the socket P1 is welded to the extension 10B and the socket P2 is welded to the extension 20B.

The joint 100 comprises a closing body 30 which allows the tubular elements 10 and 20 to be coupled.

Preferably, the body 30 is pressed against the first element 10, in such a way as to couple the first element 10 to the second element 20; the elastomers E are thereby activated.

The body 30 is then welded to the first element 10 by means of a weld W3.

The closing body 30 is preferably a closing and/or fixing ring nut.

According to an embodiment, the element 30 is welded to the first portion 10A by means of a weld W3.

The joint 100, according to an embodiment, comprises an electrical socket P3 associated, for example welded or screwed or glued, to the tubular element 20 and an electrical socket P4 associated, for example welded, screwed or glued, to the closing body 30.

According to an embodiment the socket P3 is welded to the extension 20B.

The joint 100 comprises a plurality of insulating pieces I2 positioned in a loop between the element 20 and the closing body 30.

In particular, the pieces I2 are positioned between the portion 20A and the body 30.

The pieces I2 are configured to guarantee the electrical insulation between the element 20 and the body 30 (which is in electrical continuity with the element 10).

According to an embodiment, the joint 100 comprises a layer of resin R1 positioned between the element 10 and the body 30 and delimited by the ring I1 and the pieces I2.

According to an embodiment, the joint 100 comprises a layer of resin R2 positioned between the element 20 and the body 30, on the side opposite the resin layer R1 with respect to the insulating pieces I2.

Advantageously, the rings 11, the pieces I2 and the layers R1, R2 divide the element 10 from the element 20 guaranteeing the electrical insulation between the parts of the joint 100.

The device 200 comprises at least one connector 210 connected to the electrical socket P1 and a connector 220 connected to the electrical socket P2.

The device 200 is configured to measure an electrical resistance value between the sockets P1, P2.

The device 200 is configured to generate and send an output signal S200 as a function of the measured electrical resistance value.

According to a preferred embodiment, the monitoring device 200 comprises an ohmmeter 201 (configured to measure the electrical resistance).

Advantageously, by monitoring the electrical resistance between the elements 10 and 20 it is possible to check the integrity of the insulation of the joint and therefore the safety of the pipeline at the joint.

According to an embodiment, the monitoring device 200 comprises a multimeter which integrates the ohmmeter 201.

The device 200 comprises a microprocessor 202, in communication with the ohmmeter and configured to receive the measurement performed by the ohmmeter 201.

The device 200 comprises a data transmission module 203, for example a GSM unit or the like, in communication with the microprocessor 201.

The data transmission module 203 configured for sending/transmitting the output signal S200, generated as a function of the measured electrical resistance value, to the data receiving and processing unit 300.

Advantageously, the monitoring system makes it possible to automate the periodic measurement of the electrical resistance by monitoring the electrical insulation of the joint 100.

Advantageously, the monitoring system makes it possible to remotely control the electrical insulation status of the joint 100 by measuring the electrical resistance remotely.

Advantageously, remotely controlling the insulation status of the joint 100 without the technicians physically moving to the place where the joint is located simplifies and speeds up the monitoring operations.

According to an embodiment, the device 200 comprises a satellite receiver 204 configured to generate a position signal S204 of the insulating joint.

The output signal S200 from the device 200 is a function of the measured electrical resistance value and the position signal S204.

Advantageously, the satellite receiver 204 makes it possible to promptly identify the exact position of the joint 100 and intervene in the case of a malfunction.

According to an embodiment, the signal S200 comprises information identifying the joint 100.

According to an embodiment, the monitoring system comprises an overvoltage discharge device 104.

The overvoltage discharge device 104 is connected to the socket P3 and to the socket P4.

Advantageously, the overvoltage discharge device makes it possible to protect the joint 100 if there are strong voltage discharges, for example caused by lightning.

The invention relates to a method for monitoring an insulating joint in a pipeline T comprising at least a step of:
- positioning (in a pipeline T) an insulating joint 100 comprising a tubular element 10 and a tubular element 20 coupled to each other and an insulating ring I1 positioned between the tubular elements 10, 20,
- measuring an electrical resistance value between the tubular elements 10 and 20,
- generating and sending an output signal S200 as a function of the measured electrical resistance value.

According to an embodiment, the method comprises a step of associating to the signal S200 an identification code of the insulating joint 100.

Advantageously, sending an identification code of the joint makes it possible to quickly identify the monitored insulating joint.

According to an embodiment, the method comprises a step of establishing a threshold value for the electrical resistance value.

According to an embodiment, the step of establishing a threshold value for the electrical resistance value between the first and second elements 10, 20 of the insulating joint 100 comprises a step of measuring a resistance value between the upstream and downstream of the insulating joint 100.

According to an embodiment, the step of establishing a threshold value for the electrical resistance value between the first and the second elements 10, 20 of the insulating joint 100 comprises a step of processing the threshold value as a function of the resistance value measured.

Advantageously, measuring a resistance value between the upstream and downstream of the joint 100 makes it possible to define a customised threshold value for the specific joint 100.

According to an embodiment, the step of processing the threshold value as a function of the measured resistance value comprises a step of taking as a threshold value a percentage value of the resistance value measured. According to an embodiment, the step of measuring a resistance value between the upstream and downstream of the joint 100 comprises a step of positioning a first and a second measuring plate in the ground close to the joint 100 and measuring the resistance between them.

Advantageously, the first and second plates allow a base resistance to be measured as a function of which the threshold value for the specific joint 100 is fixed.

According to an embodiment, the method comprises a step of generating an alarm signal as a function of the signal S200 and the threshold value, for example when the electrical resistance value of the joint falls below the threshold value.

Advantageously, by monitoring the joint periodically it is possible to check for any decay of the electrical resistance to the threshold value and consequently generate and send an alarm signal and intervene promptly on the joint.

According to an embodiment, the method comprises a step of sending a position signal S204 of the insulating joint 100.

Advantageously, sending a position signal makes it possible to quickly locate the insulating joint and intervene in the event of a malfunction.

## Claims

1. A system for monitoring an insulating joint in a pipeline (T), the monitoring system comprising
- an insulating joint (100) comprising a first tubular element (10),
a second tubular element (20) associated with the first tubular element (10) and a first insulating ring (11) positioned between the first and the second tubular elements (10, 20),
the insulating joint (100) comprising at least a first electrical socket (P1) welded to the first tubular element (10) and a second electrical socket (P2) welded to the second tubular element (20),
- a first monitoring device (200) connected to the insulating joint (100), the first monitoring device (200) comprising at least a first connector (210) connected to the first electrical socket (P1) and a second connector (220) connected to the second electrical socket (P2),
the first monitoring device (200) being configured to measure an electrical resistance value between the first and second electrical sockets (P1, P2) and being configured to generate and send an output signal (S200) as a function of the electrical resistance value measured;
- a data receiving and processing unit (300) in communication with the first monitoring device (200) and configured to receive the output signal (S200) of the first monitoring device (200),
the system being **characterized in that** the insulating joint (100) comprises a body (30) for closing the first tubular element (10) to the second tubular element (20), the closing body (30) covering at least partly the first tubular element (10), the second tubular element (20) and the first insulating ring (11), the closing body (30) being welded to the first tubular element (10).

2. The monitoring system according to the preceding claim, wherein the first tubular element (10) comprises a first portion (10A) and a first extension (10B) of the first portion (10A) and wherein the second tubular element (20) comprises a second portion (20A) and a second extension (20B) of the second portion (20A),
the first insulating ring (11) being located between the first and the second portions (10A, 20A),
the first and second extensions (10A, 10B) being welded to the first portion (10A) and to the second portion (20A), respectively;
the first electrical socket (P1) being welded to the first extension (10B) and the second electrical socket (P2) being welded to the second extension (20B).

3. The monitoring system according to claim 1 or 2, wherein the insulating joint (100) comprises a plurality of insulating pieces (I2) arranged in a loop between the closing body (30) and the second tubular element (20).

4. The monitoring system according to any one of the preceding claims, wherein the insulating joint (100) comprises a third electrical socket (P3) welded to the second tubular element (20) and a fourth electrical socket (P4) welded to the closing body (30), the monitoring system comprising an overvoltage discharger (104) connected to the third and fourth electrical sockets (P3, P4).

5. The monitoring system according to any one of the preceding claims, wherein the first monitoring device (200) comprises a satellite receiver (204) configured to send a position signal (S204) of the insulating joint (100), the output signal (S200) being a function of the position signal (S204) and the resistance value measured.

6. The monitoring system according to any one of the preceding claims, wherein the first monitoring device (200) comprises a multimeter or an ohmmeter.

7. A method for monitoring an insulating joint (100) in a pipeline (T), said insulating joint (100) comprising a first tubular element (10) and a second tubular element (20) coupled to each other, a first insulating ring (11) positioned between the first and the second tubular elements (10, 20) and a body (30) for closing the first tubular element (10) to the second tubular element (20), the closing body (30) covering at least partly the first tubular element (10), the second tubular element (20) and the first insulating ring (11) and the closing body (30) being welded to the first tubular element (10), said method comprising at least a step of:
- measuring an electrical resistance value between the first tubular element (10) and the second tubular element (20),
- generating and sending an output signal (S200) as a function of the measured electrical resistance value;
- receiving and processing said output signal (S200).

8. The monitoring method according to the preceding claim, comprising a step of associating with the output signal (S200) an identification code of the insulating joint (100).

9. The monitoring method according to claim 7 or 8, comprising a step of establishing a threshold value for the electrical resistance value between the first and the second elements (10, 20) of the insulating joint (100).

10. The monitoring method according to claim 9, wherein the step of establishing a threshold value for the electrical resistance value between the first and the second elements (10, 20) of the insulating joint (100) comprises a step of measuring a resistance value between the upstream and downstream of the insulating joint (100) and a step of processing the threshold value as a function of the measured resistance value.

11. The monitoring method according to claim 9 or 10, comprising a step of generating a first alarm signal as a function of the output signal (S200) and of said threshold value.

12. The monitoring method according to any of claims 8 to 11, comprising a step of sending a position signal (S204) of the insulating joint (100).

13. The monitoring method according to claim 12, wherein the output signal (S200) is a function of the position signal (S204) and of the resistance value measured.

## Patentansprüche

1. System zur Überwachung einer isolierenden Verbindung in einer Rohrleitung (T), wobei das Überwachungssystem Folgendes umfasst
- eine isolierende Verbindung (100), umfassend ein erstes rohrförmiges Element (10), ein zweites rohrförmiges Element (20), das mit dem ersten rohrförmigen Element (10) assoziiert ist, und einen ersten isolierenden Ring (11), der zwischen dem ersten und dem zweiten rohrförmigen Element (10, 20) positioniert ist, wobei die isolierende Verbindung (100) mindestens eine erste Steckdose (P1) umfasst, die an dem ersten rohrförmigen Element (10) angeschweißt ist, und eine zweite Steckdose (P2), die an dem zweiten rohrförmigen Element (20) angeschweißt ist,
- eine erste Überwachungsvorrichtung (200), die mit der isolierenden Verbindung (100) verbunden ist, wobei die erste Überwachungsvorrichtung (200) mindestens eine erste Steckverbindung (210) umfasst, die mit der ersten Steckdose (P1) verbunden ist, und eine zweite Steckverbindung (220), die mit der zweiten Steckdose (P2) verbunden ist,
wobei die erste Überwachungsvorrichtung (200) ausgelegt ist, um einen elektrischen Widerstandswert zwischen der ersten und zweiten Steckdose (P1, P2) zu messen, und ausgelegt ist, um ein Ausgabesignal (S200) abhängig von dem gemessenen elektrischen Widerstandswert zu generieren und zu senden;
- eine Datenempfangs- und -verarbeitungseinheit (300) in Kommunikation mit der ersten Überwachungsvorrichtung (200) und ausgelegt, um das Ausgabesignal (S200) der ersten Überwachungsvorrichtung (200) zu empfangen,
wobei das System **dadurch gekennzeichnet ist, dass** die isolierende Verbindung (100) einen Körper (30) zum Verschließen des ersten rohrförmigen Elements (10) am zweiten rohrförmigen Element (20) umfasst, wobei der Verschließkörper (30) das erste rohrförmige Element (10), das zweite rohrförmige Element (20) und den ersten isolierenden Ring (11) zumindest teilweise bedeckt, wobei der Verschließkörper (30) am ersten rohrförmigen Element (10) angeschweißt ist.

2. Überwachungssystem nach dem vorhergehenden Anspruch, wobei das erste rohrförmige Element (10) einen ersten Abschnitt (10A) und eine erste Ausdehnung (10B) des ersten Abschnitts (10A) umfasst und wobei das zweite rohrförmige Element (20) einen zweiten Abschnitt (20A) und eine zweite Ausdehnung (20B) des zweiten Abschnitts (20A) umfasst,
wobei sich der erste isolierende Ring (11) zwischen dem ersten und dem zweiten Abschnitt (10A, 20A) befindet und die erste und zweite Ausdehnung (10A, 10B) jeweils an dem ersten Abschnitt (10A) und dem zweiten Abschnitt (20A) angeschweißt sind,
wobei die erste Steckdose (P1) an der ersten Ausdehnung (10B) angeschweißt ist und die zweite Steckdose (P2) an der zweiten Ausdehnung (20B) angeschweißt ist.

3. Überwachungssystem nach Anspruch 1 oder 2, wobei die isolierende Verbindung (100) eine Vielzahl von isolierenden Stücken (12) umfasst, die in einer Schleife zwischen dem Verschließkörper (30) und dem zweiten rohrförmigen Element (20) angeordnet sind.

4. Überwachungssystem nach einem der vorhergehenden Ansprüche, wobei die isolierende Verbindung (100) eine dritte Steckdose (P3) umfasst, die an dem zweiten rohrförmigen Element (20) angeschweißt ist, und eine vierte Steckdose (P4), die an dem Verschließkörper (30) angeschweißt ist, wobei das Überwachungssystem einen Überspannungsableiter (104) umfasst, der mit der dritten und vierten Steckdose (P3, P4) verbunden ist.

5. Überwachungssystem nach einem der vorhergehenden Ansprüche, wobei die erste Überwachungsvorrichtung (200) einen Satellitenempfänger (204) umfasst, der ausgelegt ist, um ein Positionssignal (S204) der isolierenden Verbindung (100) zu senden, wobei das Ausgabesignal (S200) von dem Positionssignal (S204) und dem gemessenen Widerstandswert abhängig ist.

6. Überwachungssystem nach einem der vorhergehenden Ansprüche, wobei die erste Überwachungsvorrichtung (200) ein Multimeter oder ein Ohmmeter umfasst.

7. Verfahren zur Überwachung einer isolierenden Verbindung (100) in einer Rohrleitung (T), wobei die isolierende Verbindung (100) ein erstes rohrförmiges Element (10) und ein zweites rohrförmiges Element (20), die miteinander gekoppelt sind, einen ersten isolierenden Ring (11), der zwischen dem ersten und dem zweiten rohrförmigen Element (10, 20) positioniert ist, und einen Körper (30) zum Verschließen des ersten rohrförmigen Elements (10) am zweiten rohrförmigen Element (20) umfasst, wobei der Verschließkörper (30) das erste rohrförmige Element (10), das zweite rohrförmige Element (20) und den isolierenden Ring (11) zumindest teilweise bedeckt und der Verschließkörper (30) an dem ersten rohrförmigen Element (10) angeschweißt ist, wobei das Verfahren mindestens einen Schritt umfasst zum:
- Messen eines elektrischen Widerstandswerts zwischen dem ersten rohrförmigen Element (10) und dem zweiten rohrförmigen Element (20);
- Generieren und Senden eines Ausgabesignals (S200) abhängig von dem gemessenen elektrischen Widerstandswert;
- Empfangen und Verarbeiten des Ausgabesignals (S200).

8. Überwachungsverfahren nach dem vorhergehenden Anspruch, umfassend einen Schritt zum Assoziieren eines Kenncodes der isolierenden Verbindung (100) mit dem Ausgabesignal (S200).

9. Überwachungsverfahren nach Anspruch 7 oder 8, umfassend einen Schritt zum Festlegen eines Schwellenwerts für den elektrischen Widerstandswert zwischen dem ersten und dem zweiten Element (10, 20) der isolierenden Verbindung (100).

10. Überwachungsverfahren nach Anspruch 9, wobei der Schritt zum Festlegen eines Schwellenwerts für den elektrischen Widerstandswert zwischen dem ersten und dem zweiten Element (10, 20) der isolierenden Verbindung (100) einen Schritt zum Messen eines Widerstandswerts zwischen dem Einlauf und dem Auslauf der isolierenden Verbindung (100) und einen Schritt zum Verarbeiten des Schwellenwerts abhängig von dem gemessenen Widerstandswert umfasst.

11. Überwachungsverfahren nach Anspruch 9 oder 10, umfassend einen Schritt zum Generieren eines ersten Alarmsignals abhängig von dem Ausgabesignal (S200) und dem Schwellenwert.

12. Überwachungsverfahren nach einem der Ansprüche 8 bis 11, umfassend einen Schritt zum Senden eines Positionssignals (S204) der isolierenden Verbindung (100).

13. Überwachungsverfahren nach Anspruch 12, wobei das Ausgangssignal (S200) von dem Positionssignal (S204) und dem gemessenen Widerstandswert abhängig ist.

## Revendications

1. Système de surveillance d'un joint isolant dans une canalisation (T), le système de surveillance comprenant
- un joint isolant (100) comprenant un premier élément tubulaire (10), un second élément tubulaire (20) associé au premier élément tubulaire (10) et une première bague isolante (11) positionnée entre les premier et second éléments tubulaires (10, 20), le joint isolant (100) comprenant au moins une première prise électrique (P1) soudée au premier élément tubulaire (10) et une deuxième prise électrique (P2) soudée au second élément tubulaire (20),
- un premier dispositif de surveillance (200) connecté au joint isolant (100), le premier dispositif de surveillance (200) comprenant au moins un premier connecteur (210) connecté à la première prise électrique (P1) et un second connecteur (220) connecté à la deuxième prise électrique (P2),
le premier dispositif de surveillance (200) étant configuré pour mesurer une valeur de résistance électrique entre les première et deuxième prises électriques (P1, P2) et étant configuré pour générer et envoyer un signal de sortie (S200) en fonction de la valeur de résistance électrique mesurée ;
- une unité de réception et de traitement de données (300) en communication avec le premier dispositif de surveillance (200) et configurée pour recevoir le signal de sortie (S200) du premier dispositif de surveillance (200),
le système étant **caractérisé en ce que** le joint isolant (100) comprend un corps (30) pour fermer le premier élément tubulaire (10) au second élément tubulaire (20), le corps de fermeture (30) recouvrant au moins partiellement le premier élément tubulaire (10), le second élément tubulaire (20) et la première bague isolante (11), le corps de fermeture (30) étant soudé au premier élément tubulaire (10).

2. Système de surveillance selon la revendication précédente, dans lequel le premier élément tubulaire (10) comprend une première portion (10A) et une première extension (10B) de la première portion (10A) et dans lequel le second élément tubulaire (20) comprend une seconde portion (20A) et une seconde extension (20B) de la seconde portion (20A),
la première bague isolante (11) étant située entre les première et seconde portions (10A, 20A),
les première et seconde extensions (10A, 10B) étant soudées à la première portion (10A) et à la seconde portion (20A), respectivement ;
la première prise électrique (P1) étant soudée à la première extension (10B) et la deuxième prise électrique (P2) étant soudée à la seconde extension (20B).

3. Système de surveillance selon la revendication 1 ou 2, dans lequel le joint isolant (100) comprend une pluralité de pièces isolantes (12) agencées en boucle entre le corps de fermeture (30) et le second élément tubulaire (20).

4. Système de surveillance selon l'une quelconque des revendications précédentes, dans lequel le joint isolant (100) comprend une troisième prise électrique (P3) soudée au second élément tubulaire (20) et une quatrième prise électrique (P4) soudée au corps de fermeture (30), le système de surveillance comprenant un déchargeur de surtension (104) connecté aux troisième et quatrième prises électriques (P3, P4).

5. Système de surveillance selon l'une quelconque des revendications précédentes, dans lequel le premier dispositif de surveillance (200) comprend un récepteur satellite (204) configuré pour envoyer un signal de position (S204) du joint isolant (100), le signal de sortie (S200) étant une fonction du signal de position (S204) et de la valeur de résistance mesurée.

6. Système de surveillance selon l'une quelconque des revendications précédentes, dans lequel le premier dispositif de surveillance (200) comprend un multimètre ou un ohmmètre.

7. Procédé de surveillance d'un joint isolant (100) dans une canalisation (T), ledit joint isolant (100) comprenant un premier élément tubulaire (10) et un second élément tubulaire (20) couplés l'un à l'autre, une première bague isolante (11) positionnée entre les premier et second éléments tubulaires (10, 20) et un corps (30) pour fermer le premier élément tubulaire (10) au second élément tubulaire (20), le corps de fermeture (30) recouvrant au moins partiellement le premier élément tubulaire (10), le second élément tubulaire (20) et la première bague isolante (11) et le corps de fermeture (30) étant soudés au premier élément tubulaire (10), ledit procédé comprenant au moins une étape consistant à :
- mesurer une valeur de résistance électrique entre le premier élément tubulaire (10) et le second élément tubulaire (20),
- générer et envoyer un signal de sortie (S200) en fonction de la valeur de résistance électrique mesurée ;
- recevoir et traiter ledit signal de sortie (S200).

8. Procédé de surveillance selon la revendication précédente, comprenant une étape consistant à associer au signal de sortie (S200) un code d'identification du joint isolant (100).

9. Procédé de surveillance selon la revendication 7 ou 8, comprenant une étape consistant à établir une valeur de seuil pour la valeur de résistance électrique entre les premier et second éléments (10, 20) du joint isolant (100).

10. Procédé de surveillance selon la revendication 9, dans lequel l'étape consistant à établir une valeur de seuil pour la valeur de résistance électrique entre les premier et second éléments (10, 20) du joint isolant (100) comprend une étape consistant à mesurer une valeur de résistance entre l'amont et l'aval du joint isolant (100) et une étape consistant à traiter la valeur de seuil en fonction de la valeur de résistance mesurée.

11. Procédé de surveillance selon la revendication 9 ou 10, comprenant une étape consistant à générer un premier signal d'alarme en fonction du signal de sortie (S200) et de ladite valeur de seuil.

12. Procédé de surveillance selon l'une quelconque des revendications 8 à 11, comprenant une étape consistant à envoyer un signal de position (S204) du joint isolant (100).

13. Procédé de surveillance selon la revendication 12, dans lequel le signal de sortie (S200) est une fonction du signal de position (S204) et de la valeur de résistance mesurée.
